Europäisches Patentamt

European Patent Office

Office européen des brevets

(19)

(11) Numéro de publication : **0 346 221 B1**

## FASCICULE DE BREVET EUROPEEN

(12)

(45) Date de publication du fascicule du brevet :
**02.01.92 Bulletin 92/01**

(51) Int. Cl.⁵ : **F16K 11/07,** B23P 6/00,
F02C 7/232

(21) Numéro de dépôt : **89401568.4**

(22) Date de dépôt : **07.06.89**

(54) **Structure d'étanchéité statique pour commande hydromécanique de turbomachine.**

(30) Priorité : **08.06.88 FR 8807605**

(43) Date de publication de la demande :
**13.12.89 Bulletin 89/50**

(45) Mention de la délivrance du brevet :
**02.01.92 Bulletin 92/01**

(84) Etats contractants désignés :
**DE FR GB**

(56) Documents cités :
**EP-A- 0 231 673**
**EP-A- 0 237 386**
**DE-A- 2 108 705**
**US-A- 3 516 442**
**US-A- 3 951 166**

(73) Titulaire : **SOCIETE NATIONALE D'ETUDE ET DE CONSTRUCTION DE MOTEURS D'AVIATION, "S.N.E.C.M.A."
2, boulevard du Général Martial Valin
F-75724 Paris Cédex 15 (FR)**

(72) Inventeur : **Lecointre, Marc, Robert
32, rue des Haies Fleuries Vert Saint Denis
F-77240 Cesson (FR)**
Inventeur : **Lecru, Armand
Lieu dit les Thibaults Courtemaux
F-45320 Courtenay (FR)**

(74) Mandataire : **Moinat, François et al
S.N.E.C.M.A. Service des Brevets Boîte Postale 81
F-91003 Evry Cédex (FR)**

EP 0 346 221 B1

**Description**

La présente invention concerne les moyens d'étanchéité entre l'alésage d'un carter de régulation de turbomachine et une fourrure fixe à l'intérieur de laquelle coulisse un tiroir de commande.

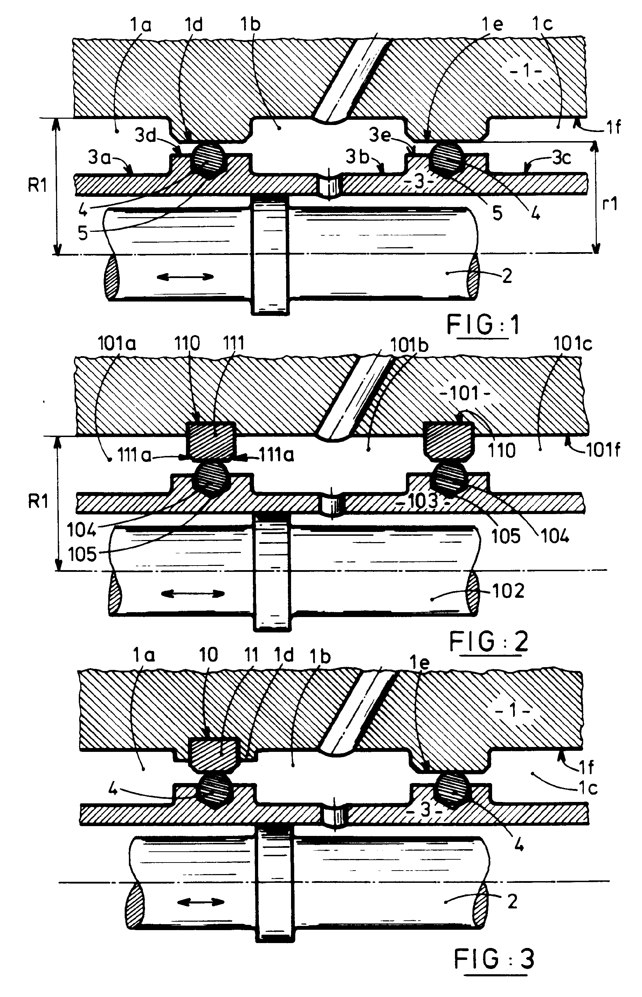

Une commande hydromécanique de régulation de turbomachine selon l'état de la technique tel que représenté à la figure 1, comprend un carter 1 généralement en alliage léger, dans lequel se déplace axialement un tiroir mobile 2, généralement en acier très dur. Entre le tiroir et le carter, on place une chemise fixe (ou fourrure) 3, également en acier très dur, destinée à permettre à la fois un bon glissement du tiroir et une bonne étanchéité entre les divers circuits hydrauliques concernés.

La surface interne du carter est divisée en un certain nombre de chambres 1a, 1b, 1c de diamètre D1 (rayon R1) séparées par des portées d'alésage 1d, 1e de diamètre d1 (rayon r1) plus faible que le diamètre D1.

La surface externe de la fourrure est divisée en autant de chambres 3a, 3b, 3c séparées par des portées 3d, 3e contenant des joints toriques 4 logés dans des gorges 5. Ces joints toriques s'appuient sur les portées d'alésage 1d, 1e du carter, lesquelles sont chanfreinées pour ne pas blesser les joints lors du montage. Une telle structure d'étanchéité est connue du document EP-A-0231673.

Dans ce type de montage, on a constaté que souvent intervenaient des ratés de fabrications, notamment sur le diamètre d1 des portées d'alésage du carter. Si ce diamètre est trop alésé le jeu entre les portées 1d-3d et 1e-3e devient trop grand pour que le joint torique 4 puisse remplir avec efficacité son rôle d'étanchéité.

De ce fait, en raison de la difficulté de recharger un alésage trop alésé, on devait rebuter le carter qui comportait un tel défaut.

On a donc cherché à éviter ce genre de problème en même temps que l'on cherchait un moyen de simplifier la fabrication de tels carters pour en diminuer le coût de fabrication et le taux de rebut.

On a pensé pour ce faire à remplacer les portées d'alésage 1d, 1e du carter par des éléments amovibles, coopérant avec les joints toriques de la fourrure, ce qui diminue le coût de fabrication, car un seul alésage de diamètre constant est nécessaire dans le carter.

On a cherché également à pouvoir réhabiliter les carters défectueux auparavant rebutés et on y est parvenu en réalésant la portée d'épaulement défectueuse du carter, en creusant une gorge et en disposant un élément amovible qui coopère avec le joint torique de la fourrure.

Ainsi pour permettre d'atteindre les deux buts ci-dessus mentionnés, l'invention propose de réaliser une structure d'étanchéité statique pour former des chambres à des pressions différentes entre l'alésage d'un carter d'une régulation de turbomachine et une fourrure fixe par rapport au carter à l'intérieur de laquelle coulisse un tiroir, ledit tiroir pouvant, par ses déplacements axiaux amener du fluide sous pression dans les chambres formées entre le carter et la fourrure par des orifices de ladite fourrure, caractérisée en ce que ladite structure est constituée par la combinaison d'un joint de section rectangulaire disposé dans une gorge interne de l'alésage du carter et par un joint torique disposé dans une gorge externe d'un épaulement de la fourrure.

D'autres caractéristiques de l'invention ainsi que le procédé de réparation des carters défectueux tels que connus antérieurement seront explicités au regard des figures annexées parmi lesquelles :

— la figure 1 est représentative de l'état de la technique discuté plus haut ;

— la figure 2 montre la réalisation d'une structure selon l'invention ;

— la figure 3 montre une structure selon l'état de la technique antérieure réhabilitée au moyen du procédé de réparation selon l'invention.

Si l'on se réfère à la figure 2, dans laquelle les éléments similaires à ceux de la figure 1 portent des chiffres de référence similaires augmentés d'une centaine, la surface interne du carter ne comporte plus d'épaulements, mais seulement un alésage 101f de diamètre constant égal à D1 (rayon R1 sur la figure 2). Face aux joints toriques 104 de la fourrure 103, des gorges 110 ont été réalisées intérieurement à l'alésage 101f, ces gorges ayant une section rectangulaire. Dans ces gorges ont été disposés des joints en polytétrafluoroéthylène (PTFE) semi-souple à section rectangulaire 111 dont les deux arêtes internes 111a ont été chanfreinées.

Les différentes chambres 101a, 101b, 101c, formées entre le carter 101 et la fourrure 103 sont alors seulement séparées par les joints rectangulaires 111 du carter coopérant avec les joints toriques 104 de la fourrure 103.

A la figure 3, on a représenté une commande hydromécanique selon l'état de la technique dont une portée d'épaulement du carter, défectueuse a été réhabilitée selon le procédé de l'invention.

Ainsi, pour réparer une structure d'étanchéité défectueuse réalisée entre une fourrure 3 interne à un carter 1 et fixe par rapport à celui-ci, ledit carter comportant des chambres annulaires 1a, 1b, 1c séparées par des portées circulaires 1d, 1e tandis que la fourrure comporte des joints toriques 4 coopérant avec chaque portée circulaire 1d, 1e du carter, on réalise les étapes suivantes :

— on retire la fourrure 3 du carter 1,

— on réalése la portée circulaire défectueuse 1d au diamètre adéquat, par exemple au diamètre de fond de chambre 1f du carter 1,

— on creuse une gorge à section rectangulaire

10 à l'endroit de l'ancienne portée défectueuse,
— on dispose dans la gorge du carter un joint annulaire 11 semi-rigide à section rectangulaire,
— on remoule la fourrure 3 à l'intérieur du carter en faisant coopérer le joint annulaire à section rectangulaire 11 du carter avec 1e joint torique 4 de la fourrure 3.

Ainsi, la chambre 1b formée entre le carter 1 et la fourrure est séparée de la chambre la seulement par les joints 11 et 4 tandis qu'elle est séparée de la chambre 1c par la portée annulaire le du carter et par le joint torique 4 correspondant de la fourrure 3.

Ce procédé simplifie grandement la réparation de ce genre de dispositifs et permet d'utiliser des carters qui autrefois eussent été avec regret rebutés.

## Revendications

1. Structure d'étanchéité statique pour former des chambres (101a, 101b, 101c) à des pressions différentes entre l'alésage (101f) d'un carter (101) d'une régulation de turbomachine et une fourrure (103) fixe par rapport au carter (101) à l'intérieur de laquelle coulisse un tiroir (102) ledit tiroir pouvant, par ses déplacements axiaux, amener du fluide sous pression dans les chambres (101a, 101b, 101c) formées entre le carter (101) et la fourrure (103) par des orifices de ladite fourrure, caractérisée en ce que ladite structure est constituée par la combinaison d'un joint de section rectangulaire (111) disposé dans une gorge interne (110) de l'alésage (101f) du carter (101) et par un joint torique (104) disposé dans une gorge externe (105) d'un épaulement de la fourrure (103).

2. Structure d'étanchéité selon la revendication 1 caractérisée en ce que le joint à section rectangulaire comporte des chanfreins (111a).

3. Structure d'étanchéité selon l'une des revendications 1 ou 2, caractérisée en ce que la gorge (110) du joint à section rectangulaire est réalisée dans une portée d'alésage interne (1d) du carter.

4. Structure d'étanchéité selon l'une quelconque des revendications 1 à 3 caractérisée en ce que le joint à section rectangulaire (111) du carter est réalisé en polytétrafluoroéthylène (PTFE).

5. Procédé de réparation d'une structure d'étanchéité défectueuse réalisée entre une fourrure (3) interne à un carter (1) et fixe par rapport à celui-ci, ledit carter (1) comportant des chambres annulaires (1a, 1b, 1c) séparées par des portées circulaires (1d, 1e) tandis que la fourrure (3) comporte des joints toriques (4) coopérant avec chaque portée circulaire (1d, 1e) du carter, caractérisé en ce que
— on retire la fourrure (3) du carter (1),
— on réalèse la portée circulaire défectueuse (1d) à un diamètre convenable compris entre son diamètre d'origine et le diamètre D1 de fond de chambre du carter,

— on creuse une gorge à section rectangulaire (10) à l'endroit de l'ancienne portée défectueuse (1d),
— on dispose dans la gorge du carter un joint (11) à section rectangulaire,
— on remoule la fourrure (3) à l'intérieur du carter (1) en faisant coopérer le joint annulaire à section rectangulaire (11) du carter avec le joint torique (4) de la fourrure (3).

## Patentansprüche

1. Statische Dichtungsstruktur zur Bildung von Kammern (101a,, 101b, 101c) mit unterschiedlichen Drücken zwischen der Bohrung (101f) eines Reglergehäuse einer Turbomaschine und einer relativ zu dem Gehäuse (101) festen Buchse (103), in deren Innern ein Schieber (102) gleitet, durch dessen axiale Bewegungen unter Druck stehendes Fluid durch Öffnungen der Buchse in die zwischen dem Gehäuse (101) und der Buchse (103) gebildeten Kammer (101a, 101b, 101c) geleitet werden kann, **dadurch gekennzeichnet**, daß die Dichtungsstruktur aus der Kombination einer in einer Innennut (110) der Bohrung (101f) des Gehäuses (101) angeordneten Dichtung (111) mit rechteckigem Querschnitt und einer in einer Außennut (105) einer Schulter der Buchse (103) angeordneten torusförmigen Dichtung (104) besteht.

2. Dichtungsstruktur nach Anspruch 1, dadurch gekennzeichnet, daß die Dichtung mit rechteckigem Querschnitt Abschrägungen (111a) aufweist.

3. Dichtungsstruktur nach Anspruch 1 oder 2, dadurch gekennzeichnet, daß die Nut (111) für die Dichtung mit rechteckigem Querschnitt in einer inneren Tragfläche (1d) der Bohrung des Gehäuses angebracht ist.

4. Dichtungsstruktur nach einem der Ansprüche 1 bis 3, dadurch gekennzeichnet, daß die Gehäusedichtung (111) mit rechteckigem Querschnitt aus Polytetrafluorethylen (PTFE) hergestellt ist.

5. Verfahren zum Reparieren einer schadhaften Dichtungsstruktur, die zwischen einer im Innern eines Gehäuses (1) und relativ zu diesem festen Buchse (3) ausgebildet ist, wobei das Gehäuse (1) ringförmige Kammern (101a, 101b, 101c) besitzt, die durch kreisförmige Tragflächen (1d) voneinander getrennt sind, während die Buchse (3) torusförmige Dichtungen (4) aufweist, die mit den einzelnen kreisförmigen Tragflächen (1d, 1e) des Gehäuses zusammenwirken, **dadurch gekennzeichnet**,
daß man die Buchse (3) aus dem Gehäuse (1) herauszieht,
daß man die schadhafte kreisförmige Tragfläche (1d) auf einen passenden Durchmesser nachbohrt, der zwischen seinem ursprünglichen Durchmesser und dem Durchmesser D1 des Boden der Kammer des Gehäuses liegt,

daß man an der Stelle der vormaligen schadhaften Tragfläche (1d) eine Nut (10) mit rechteckigem Querschnitt herausarbeitet,

daß man in der Nut des Gehäuses eine Dichtung mit rechteckigem Querschnitt anordnet, und

daß man eine Neuanordnung der Buchse (3) Im Innern des Gehäuses (1) vornimmt, indem man die ringförmige Dichtung (11) des Gehäuses mit rechteckigem Querschnitt mit der torusförmigen Dichtung (4) der Buchse (3) zusammenwirken läßt.

**Claims**

1. Static sealing structure to form chambers (101a, 101b, 101c) at different pressures between a bore (101f) in a housing (101) of a turboshaft engine regulator and a fixed sleeve (103) fixed in relation to the housing (101) inside which stides a plunger (102) the said plunger by its axial movements being able to supply fluid under pressure to the chambers (101a, 101b, 101c) formed between the housing (101) and the sleeve (103) through holes in the said sleeve, characterised in that the said structure is constituted by the combination of a joint of rectangular cross section (111) fitted into an internal groove (110) in the dire (101f) of the housing (101) and an O-ring (104) seated in an external groove (105) in a shoulder on the sleeve (103).

2. Sealing structure in accordance with Claim 1, characterised in that the joint of rectangular cross section comprises the chamfers (111 a).

3. Sealing structure in accordance with either of Claims 1 or 2, characterised in that the groove (110) for the joint of rectangular cross section is cut in a shoulder of the inner dire (1d) of the housing.

4. Sealing structure in accordance with any of Claims 1 to 3, characterised in that the joint of rectangular cross section (111) of the housing is made of polytetrafluorethylene (PTFE).

5. Procedure for repairing a faulty sealing structure contrived between a sleeve (3) inside a housing (1) and fixed in relation to the latter, the said housing (1) comprising annular chambers (1a, 1b, 1c) separated by circular shoulders (1d, 1e) whilst the sleeve (3) comprises O-rings (4) operating in conjunction with each circular shoulder (1d, 1e) of the housing, characterised in that :

— the sleeve (3) is withdrawn from the housing (1).

— the faulty circular bore is bored out to a suitable diameter lying between its original diameter and the diameter D1 of the bottom of the chamber in the housing.

— a groove of rectangular cross section (10) is cut in the area of the old faulty shoulder (1d).

— in this groove in the housing is seated a joint (11) of rectangular cross section.

— the sleeve (3) is reinserted into the housing (1) causing the annular joint (11) of rectangular cross section to operate in conjunction with the O-ring (4) of the sleeve (3).

FIG : 1

FIG : 2

FIG : 3